Europäisches Patentamt

European Patent Office

Office européen des brevets

(19)

(11) **EP 0 709 628 B1**

(12) **FASCICULE DE BREVET EUROPEEN**

(45) Date de publication et mention
de la délivrance du brevet:
**09.12.1998 Bulletin 1998/50**

(51) Int Cl.$^6$: **F25B 17/08**, C09K 5/00

(21) Numéro de dépôt: **95402392.5**

(22) Date de dépôt: **25.10.1995**

(54) **Système thermochimique et son utilisation**

Thermochemische Anlage und deren Verwendung

Thermochemical system and its use

(84) Etats contractants désignés:
**AT BE CH DE DK ES FR GB GR IE IT LI LU NL PT
SE**

(30) Priorité: **28.10.1994 FR 9412938**

(43) Date de publication de la demande:
**01.05.1996 Bulletin 1996/18**

(73) Titulaire: **ELF AQUITAINE
92400 Courbevoie (FR)**

(72) Inventeur: **Goetz, Vincent
F-66000 Perpignan (FR)**

(74) Mandataire: **Timoney, Ian Charles Craig
Elf Exploration Production
Département Propriété Industrielle
Tour Elf
EP/T/RD/DPI - Bureau 34 G 47
92078 Paris La Défense Cedex (FR)**

(56) Documents cités:
EP-A- 0 307 296    EP-A- 0 326 486
EP-A- 0 382 586    WO-A-91/15292
WO-A-94/11685    FR-A- 613 266
US-A- 1 854 589    US-A- 1 892 407
US-A- 5 165 247    US-A- 5 263 330

## Description

La présente invention se rapporte à un système thermochimique ainsi qu'à l'utilisation d'un tel système thermochimique.

Le système thermochimique objet de l'invention a les caractéristiques principales :

- on utilise pour le fonctionnement du système lui-même, l'énergie thermique ; l'énergie électrique peut éventuellement n'être utilisée que pour la circulation des fluides caloporteurs,
- on utilise, comme "moteur chimique" une réaction réversible entre un solide et un gaz du type :

$$<\text{Solide A}> + (G) \xrightarrow[\;\;2\;\;]{\;\;1\;\;} <\text{solide B}>$$

La réaction est exothermique dans le sens 1, ce qui veut dire que dans ce sens, elle produit de la chaleur, et endothermique dans le sens 2, c'est-à-dire que dans ce sens elle produit du froid.

Un tel système permet le stockage d'énergie sous forme chimique et présente des domaines d'application variés.

De plus, un tel système permet la production, à partir d'une source de chaleur à la température Ts, de chaleur à la température Tu telle que :

$$Tu < Ts$$

Dans ce cas, le système est appelé "pompe à chaleur chimique".

Un tel système permet également la production, à partir d'une source de chaleur à la température T's, de chaleur à la température T'u telle que :

$$T'u > T's$$

Dans ce cas, le système est appelé "thermo transformateur chimique".

Grâce à ce système, il est possible de produire de l'énergie frigorifique à partir d'une source de chaleur et de produire simultanément, à partir d'une source de chaleur à la température T"s, de la chaleur à la température T"u où (T"u < T"s), et de l'énergie frigorifique.

Suivant les cas, l'utilisation de la chaleur ou du froid produit est simultanée à la consommation d'énergie à haute température (Ts, T's, T"s) ou différée dans le temps (effet de stockage).

Le réactif utilisé dans de tels systèmes thermochimiques comprend un agent actif, typiquement un sel, mélangé à un liant inerte qui permet un bon transfert de masse et de chaleur. En général, on utilise comme liant du graphite éxpansé, eventuellement recomprimé.

Les documents EP-A-0 129 473 et EP-A 0 477 343 décrivent des réactifs constitués d'un agent actif unique et de graphite expansé. Ces réactifs sont utilisés pour mettre en oeuvre des réactions réversibles avec un gaz, par exemple, de l'ammoniac.

Le document EP-A-0 129 473 décrit en particulier la possibilité d'utiliser un mélange de ces agents actifs pour former un réactif.

Les systèmes thermochimiques mettant en oeuvre ce type de réaction comprennent des chambres de réaction, reliées soit ensemble par paires, soit à un évaporateur et un condenseur, chaque chambre de réaction contenant un mélange d'un sel unique et de graphite expansé. Ce type de système est décrit dans le document EP-A 0 250 368. Le document FR-A- 2 687 462 décrit un dispositif thermochimique qui comprend des chambres de réaction qui sont munies chacune de blocs de réactif disposés l'un à côté de l'autre, chaque bloc étant imprégné d'un sel différent. L'utilisation de cet agencement de blocs améliore considérablement la performance du dispositif, plus communément appelé "COP".

Cependant, la réalisation et le montage de plusieurs blocs, chaque bloc étant muni d'un sel associé, présentent des difficultés pratiques.

Les caractéristiques réactionnelles d'un bloc de réactif, formé de graphite expansé, recomprimé et imprégné d'un sel, sont fonction de la densité du bloc, du sel utilisé et de sa concentration. L'utilisation d'un seul sel pour imprégner le graphite résulte en une gamme de caractéristiques qui est nécessairement limitée.

La présente invention a pour objet un système thermochimique.

Pour répondre à cet objet, l'invention propose un système thermochimique destiné à produire du froid et/ou de la chaleur par réaction chimique solide-gaz comprenant un premier réacteur contenant un réactif formé d'un support comprimé et un agent actif vis-à-vis d'un gaz, l'agent actif comprenant au moins deux sels répartis dans l'ensemble du support comprimé, le réacteur étant en communication, dans une première phase opératoire avec un condenseur pour le gaz, le système comprenant de plus deux évaporateurs, le réacteur étant destiné à être mis en communication sélectivement, dans une deuxième phase opératoire, avec l'un ou l'autre des évaporateurs afin de produire du froid à deux niveaux de température.

La présente invention a également pour objet l'utilisation d'un système thermochimique afin de pouvoir produire du froid et/ou de la chaleur à au moins deux niveaux de température, ou à au moins deux niveaux de puissance.

Pour répondre à cet objet, l'invention propose l'utilisation d'un système thermochimique, comprenant un réacteur formé d'un support comprimé et d'un agent actif vis-à-vis d'un gaz, le réacteur étant en communication, dans une première phase opératoire avec une enceinte destinée à retenir le gaz, et dans une deuxième phase opératoire avec une enceinte destinée à libérer le gaz, l'agent actif comprenant au moins deux sels répartis dans l'ensemble du support comprimé, pour produire du froid et/ou de la chaleur à au moins deux niveaux de température, ou à au moins deux niveaux de puissance.

Les avantages, ainsi que le fonctionnement de la présente invention apparaîtront plus clairement à la lecture de la description suivante donnée de manière non limitative en référence aux dessins annexés sur lesquels :

- la figure 1 montre des courbes des caractéristiques réactionnelles de blocs de réactifs ;
- les figures 2 et 3 sont des diagrammes de Clapeyron ;
- les figures 4A,4B,4C et 4D sont des vues schématiques d'un système thermochimique permettant la mise en oeuvre du procédé selon l'invention ;
- la figure 5A est un diagramme de Clapeyron concernant un deuxième mode de réalisation de l'invention ;
- les figures 5B à 5F sont des vues schématiques d'un système thermochimique selon le deuxième mode de réalisation ;
- la figure 6 est un diagramme de Clapeyron concernant un troisième mode de réalisation ;
- la figure 7A est un diagramme de Clapeyron concernant un quatrième mode de réalisation de l'invention ; et
- la figure 7B est une vue schématique d'un système thermochimique selon le quatrième mode de réalisation.

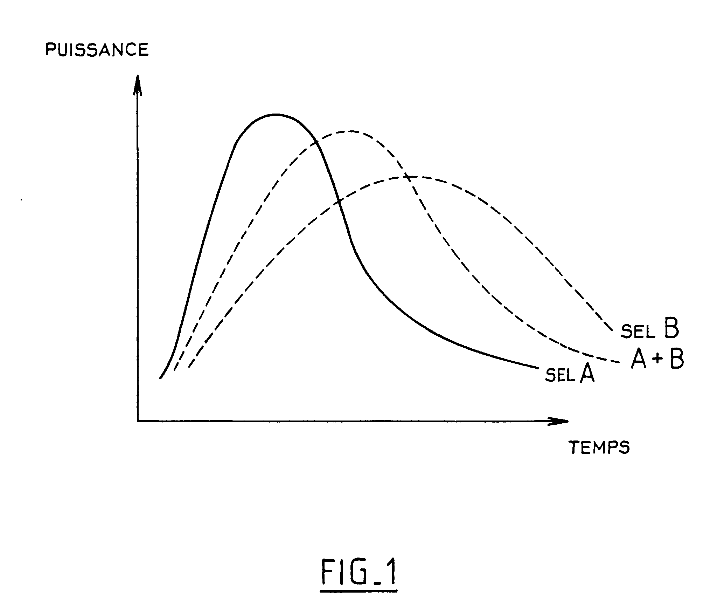

Les caractéristiques réactionnelles d'un bloc de réactif, formé de graphite expansé recomprimé et imprégné d'un sel sont fonction de la densité du bloc, du sel utilisé et de sa concentration ainsi que du terme d'écart à l'équilibre qui lui est imposé. Le terme d'écart à l'équilibre peut être représenté par la valeur de DTeq, différence entre la température d'équilibre du sel et la température de contrainte imposée au réactif via un échangeur par un fluide caloporteur. Sur la figure 1 sont représentées des courbes de puissance fonction du temps pour des blocs de réactif fonctionnant dans des conditions thermodynamiques données : niveaux de pression et température de contrainte identiques.

La ligne continue est la courbe de réaction d'un bloc de graphite expansé recomprimé ayant une densité donnée, imprégné d'un sel A. La ligne hachurée est la courbe de réaction du même type de bloc mais imprégné d'un sel B. La ligne en pointillé est la courbe de réaction du même type de bloc imprégné des sels A et B dans une proportion fixée. Comme il ressort de la figure 1, la courbe A+B est essentiellement la résultante des courbes A et B. En combinant deux ou plusieurs sels dans un bloc de réactif, il est possible, en sélectionnant les sels ainsi que leurs proportions, de produire un réactif ayant une courbe de puissance donnée, courbe qui est la résultante des courbes de puissance des sels utilisés.

Le choix d'un agent actif à utiliser dans un réactif de système thermochimique est fonction de l'application pour laquelle le système est destiné. La réalisation d'un bloc de réactif contenant deux ou plusieurs sels différents permet de réaliser de nombreuses applications qui n'étaient pas envisageables jusqu'alors avec des réactifs ne contenant qu'un seul sel.

Par "agent actif" dans le présent contexte, on entend un composé choisi parmi les halogénures, pseudohalogénures, carbonates, sulfates, nitrates, oxydes ou hydrures métalliques. Le gaz susceptible de réagir avec de tels agents réactifs eput être l'eau, l'ammoniac, $CO_2$, $SO_2$, $SO_3$ ou $H_2$.

Dans l'exemple suivant un bloc de graphite expansé recomprimé ayant une densité comprise entre 0,02 et 0,8, est imprégné par une solution de six sels différents dont les caractéristiques thermodynamiques sont indiquées ci-après :

| Sel | Equilibre | Enthalpie (Jmole$^{-1}$) | Entropie (Jmole$^{-1}$K$^{-1}$) |
|---|---|---|---|
| S1: CaCl2 | (8/4) | 41 000 | 230 |

(suite)

| Sel | Equilibre | Enthalpie (Jmole$^{-1}$) | Entropie (Jmole$^{-1}$K$^{-1}$) |
|---|---|---|---|
| S2: ZnCl2 | (6/4) | 45 000 | 230 |
| S3: MnCl2 | (6/2) | 48 000 | 228 |
| S4: FeCl2 | (6/2) | 52 000 | 228 |
| S5: MgCl2 | (6/2) | 56 000 | 230 |
| S6: NiCl2 | (6/2) | 59 000 | 228 |

Le fonctionnement d'un système mettant en oeuvre le réactif selon l'invention est fondé sur la réaction entre un sel et un gaz. Comme il s'agit d'une véritable réaction chimique, on a un système monovariant à l'équilibre, c'est-à-dire qu'il existe une relation univoque entre la température et la pression de la forme log P = A - B/T, expression dans laquelle P est la pression, T la température en °K et A et B sont des constantes caractéristiques du couple sel/gaz utilisé.

Dans la description suivante, les phases de fonctionnement seront représentées sur des diagrammes de Clapeyron qui comportent des courbes d'équilibre des sels utilisés.

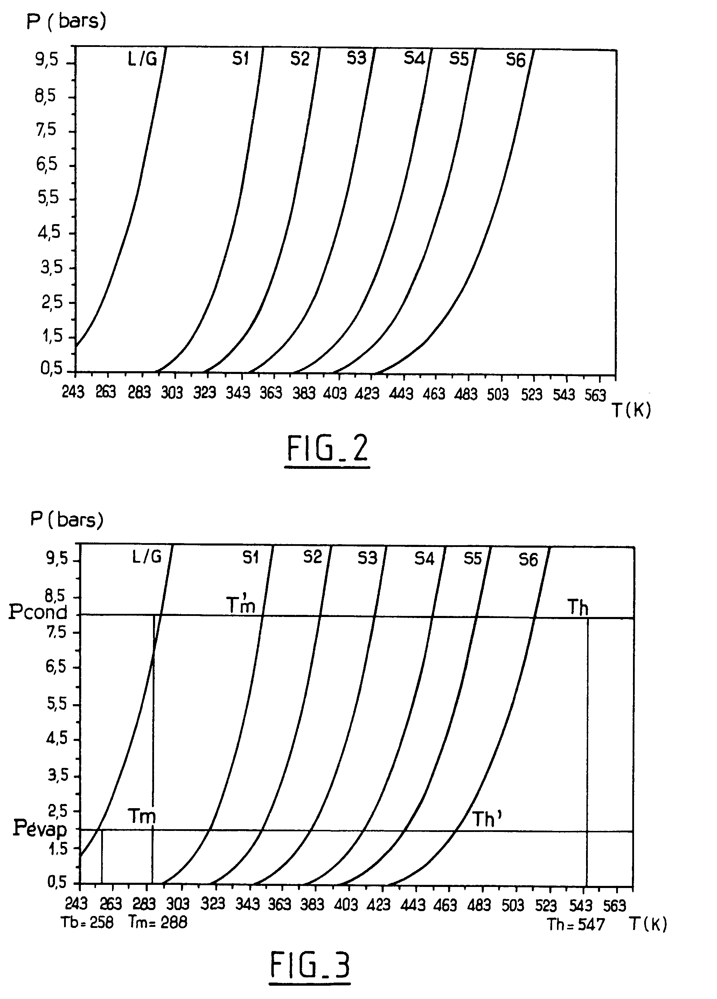

La figure 2 est un diagramme de Clapeyron comportant les courbes d'équilibre des six sels utilisés pour imprégner le bloc dans le présent exemple. La courbe d'équilibre entre les phases gazeuse et liquide du gaz utilisé, qui, dans l'exemple, est l'ammoniac est également indiquée.

La composition du réactif est déterminée de manière à égaler les quantités de chaleur nécessaires à la transformation de chaque sel. Soit $\rho_{mel}$ la densité du graphite expansé recomprimé et T1 le taux de graphite on a :

$$\rho_{mel}(1\text{-}T1) = \rho_{sel} = \rho_{s1} + \rho_{s2} + \rho_{s3} + \rho_{s4} + \rho_{s5} + \rho_{s6}$$

avec les égalités :

$$\forall i=1 \text{ à } 6 \; \frac{\rho_{s1}}{Mmol_{s1}} \, n_{s1} \, \Delta h_{s1} = \frac{\rho_{s1}}{Mmol_{si}} \, n_{si} \, \Delta h_{si}$$

$\rho_{si}$      densité du sel i (kg m$^{-3}$)
$Mmol_{si}$      masse molaire du sel i (kg mole$^{-1}$)
$n_{si}$      coefficient stoechiométrique
$\Delta h_{si}$      enthalpie de réaction du sel Si Joules/Mole de gaz

On obtient alors :

$$\forall i=1 \text{ à } 6 : Nsel_{si} = \frac{\rho_{mel}(1\text{-}T1)}{n_{si}\Delta h_{si} \; \sum\limits_{j=1}^{6} \left( \dfrac{Mmol_{sj}}{n_{sj}\Delta h_{sj}} \right)}$$

$Nsel_{si}$      mole de sel si par mètre cube de réacteur.

Un procédé d'utilisation d'un réactif préparé selon l'exemple précédent sera maintenant étudié en se référant au diagramme de Clapeyron de la figure 3.

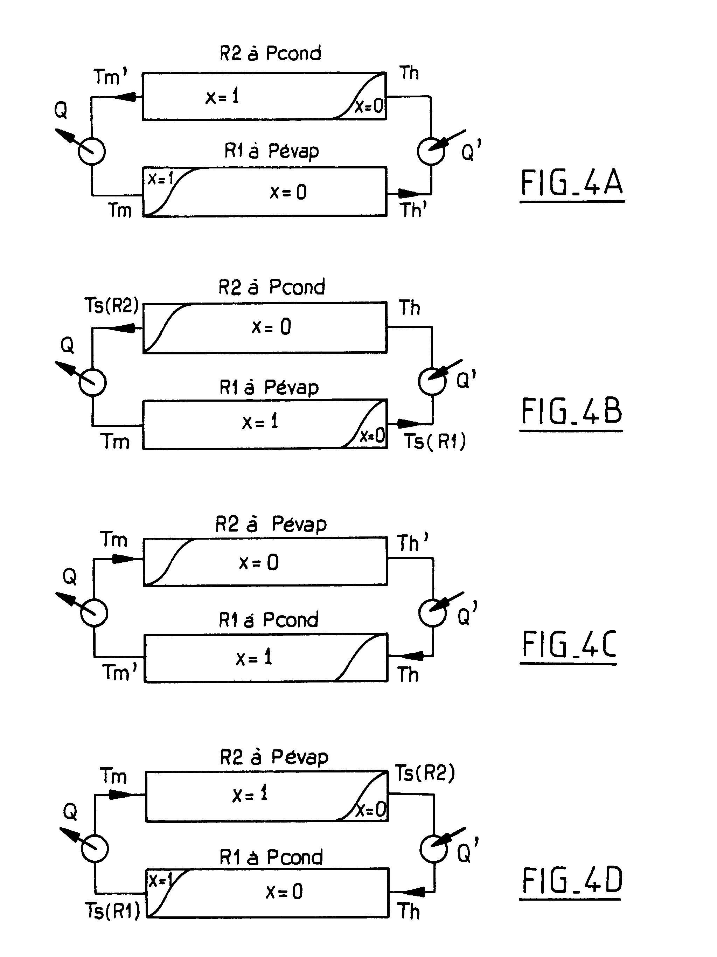

Un système thermochimique destiné à permettre l'utilisation de ce réactif est représenté sur les figures 4A,4B,4C et 4D. Ce système comprend deux enceintes destinées à contenir chacune un bloc de réactif, les enceintes seront ci-après appelées réacteurs R1 et R2. Le système comprend, de plus, un condenseur C et un évaporateur E, une source de chaleur (non représentée) destinée à fournir la haute température Th. Cette source de chaleur peut comprendre, par exemple, un brûleur à gaz ou une résistance électrique. Le système est complété par un échangeur de chaleur avec l'air ambiant qui permet de refroidir, à une température Tm, un fluide caloporteur utilisé dans le système, et par une pompe de circulation de ce fluide.

Les niveaux de température et de pression au cours des différentes phases de mise en oeuvre du système sont présentés sur le diagramme de Clapeyron de la figure 3.

Sur la figure 4a est représenté le système lors du démarrage du cycle de fonctionnement où le réacteur R1 est au niveau de température Th' à la pression de l'évaporateur $P_{\text{évap}}$ ; le réacteur R2 est à Tm' à la pression du condenseur $P_{\text{cond}}$. La pompe de circulation est en marche, le fluide caloporteur est chauffé par la source à Th et commence à chauffer la droite du réacteur R2. Lorsqu'il traverse le réacteur et si les conditions pour la formation d'un front de chaleur sont réunies, le fluide caloporteur est refroidi jusqu'à Tm'. Il passe ensuite dans l'échangeur de chaleur qui permet de le refroidir de Tm' à Tm. Le fluide caloporteur entre dans le réacteur R1 et commence à refroidir la gauche du réacteur R1. Lorsqu'il traverse le réacteur le fluide caloporteur est réchauffé à la température initiale du réacteur Th'. Le fluide est ensuite réchauffé par la source à Th avant d'être envoyé dans R2.

Au cours du déroulement de cette phase, le front de chaleur va progressivement se déplacer dans le sens de circulation du fluide caloporteur (fig 4b) :

- de la droite vers la gauche pour le réacteur R2 ;
- de la gauche vers la droite pour le réacteur R1.

Si l'on considère que les réacteurs sont à pression uniforme, le réchauffement de R2 de Tm' à Th s'accompagne des désorptions successives des sels qui constituent le réactif. Ceux-ci réagissent localement en fonction de leur emplacement dans le diagramme de Clapeyron : S1, puis S2, puis S3,... jusqu'à S6. Le refroidissement du réacteur R1 de Th' à Tm s'accompagne des synthèses successives des sels utilisés. Le premier sel à réagir est S6, puis S5, ... jusqu'à S1.

Cette phase se poursuit tant que la température de sortie de R1 reste suffisamment élevée (proche de Th'), ceci pour minimiser la quantité de chaleur à fournir au fluide caloporteur pour remonter sa température de la température de sortie à Th. Le test de changement de phase peut se faire sur un niveau de température de sortie de R1, un niveau d'avancement du réacteur ou encore sur une durée.

L'enclenchement de la phase suivante se fait en inversant le sens de circulation du fluide caloporteur. Les réacteurs sont isolés du condenseur et de l'évaporateur. Le fluide caloporteur chauffé à Th par la source de chaleur commence à présent à chauffer le réacteur R1 par la droite. Le fluide caloporteur est refroidi lors de la traversée de R1 jusqu'à une température proche de Tm ; le supplément de calories à évacuer (si nécessaire) est obtenu par l'échangeur de chaleur qui impose la température Tm à l'entrée du réacteur R2. Le fluide caloporteur entre alors dans le réacteur R2 par la gauche. Il est réchauffé lors de sa traversée vers une température proche de Th.

Au démarrage de cette phase, R1 est à la pression $P_{\text{évap}}$, R2 est à la pression $P_{\text{cond}}$. L'apport de chaleur au réacteur R1 entraîne le démarrage de la désorption dans la partie droite du réacteur (en regardant les dessins). Le réacteur étant isolé, la pression augmente dans l'ensemble du réacteur. Le refroidissement du réacteur R2 par la gauche entraîne le début de l'absorption. Le réacteur étant isolé la pression chute dans l'ensemble du réacteur. Le passage de Tm à Tm' en sortie de réacteur R1, ou de Th à Th' en sortie du réacteur R2 s'effectue rapidement car il ne met en jeu que des termes de chaleur sensible ; le mélange se trouve en dehors du domaine de réaction pour l'ensemble des sels. Lorsque la pression dans R1 atteint la pression $P_{\text{cond}}$ et la pression dans R2 atteint la pression $P_{\text{évap}}$, les réacteurs sont connectés respectivement au condenseur et à l'évaporateur (ceci pouvant être réalisé automatiquement par l'intermédiaire de clapets). Le système se retrouve alors dans les mêmes conditions qu'au démarrage du cycle en inversant les rôles des réacteurs R1 et R2 (fig. 4c).

Le déroulement du demi-cycle suivant est identique à la description faite précédemment en inversant les numéros des réacteurs et le sens de déplacements des fronts de chaleurs. A la fin de la deuxième phase de production les réacteurs se trouvent dans les conditions présentées figure 4d.

Ce type de cycle de fonctionnement appliqué à une production de froid à l'évaporation permet par l'utilisation du réactif de la présente invention d'atteindre des performances identiques à celle décrite dans le document FR-A-2687462.

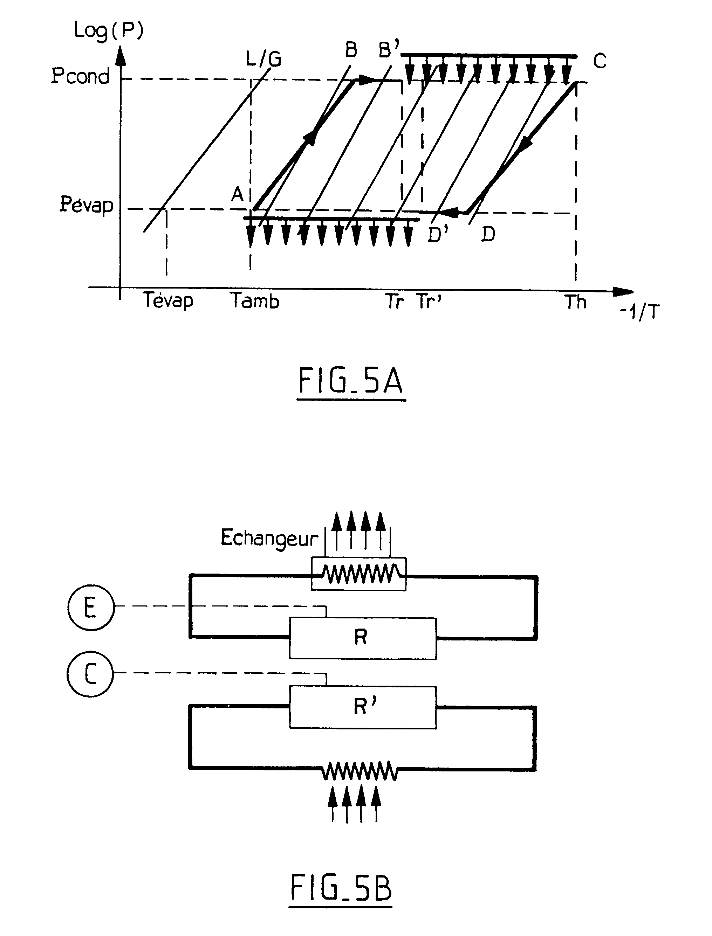

La figure 5A est un diagramme de Clapeyron comportant les droites d'équilibre des sels utilisés, ainsi que la droite d'équilibre entre les phases gazeuse et liquide du gaz utilisé qui, dans l'exemple, est l'ammoniac.

Sur les figures 5B à 5F est représenté un système thermochimique comprenant deux réacteurs R et R', chacun renfermant un bloc de réactif contenant les 6 sels illustrés sur le diagramme de Clapeyron de la figure 5A. Chaque réacteur est muni d'un circuit de fluide caloporteur permettant de fournir ou d'extraire de la chaleur. Les réacteurs R et R' peuvent être reliés sélectivement à un évaporateur E ou à un condenseur C par des conduits appropriés.

Le cycle de fonctionnement du système sera étudié en faisant référence aux points représentés sur le diagramme de la figure 5A.

L'état initial du système est représenté sur la figure 5B, les conditions de marche des réacteurs R et R' correspondant aux points A et C respectivement de la figure 5A. Le circuit caloporteur apporte au réacteur R' de la chaleur à la température Tn. En même temps, le réacteur R est refroidi par son circuit caloporteur.

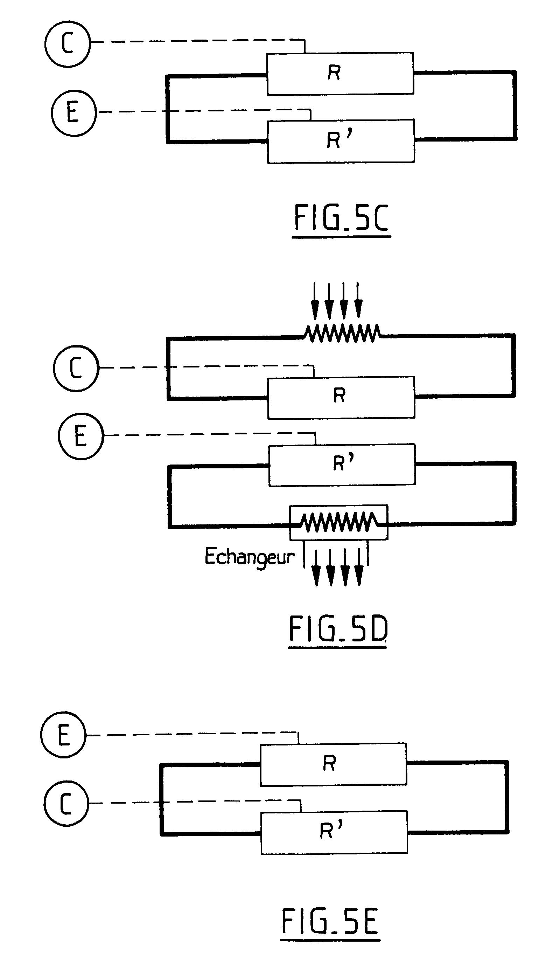

Lors de la première étape de fonctionnement représentée sur la figure 5C, le réacteur R passe du point A au point B' en étant relié au condenseur C à partir du point B. En même temps, le réacteur R' passe du point C au point D' en étant relié à l'évaporateur E à partir du point D. Les deux circuits caloporteurs sont reliés pendant cette étape, le fluide caloporteur étant mis en circulation afin de transférer de la chaleur entre les réacteurs.

La deuxième étape est représentée sur la figure 5D. Le réacteur R passe du point B' au point C, de la chaleur étant apportée par le circuit caloporteur. Le réacteur R' passe du point D' au point A, de la chaleur étant extraite par l'intermédiaire de l'échangeur du circuit caloporteur associé.

Sur la figure 5E est représentée la troisième étape de fonctionnement. Le réacteur R passe du point C au point D' en étant relié à l'évaporateur E à partir du point D, tandis que le réacteur R' passe du point A au point B' en étant relié, à partir du point B, au condenseur C. Les deux circuits caloporteurs sont reliés pendant cette étape, le fluide caloporteur étant mis en circulation afin de transférer de la chaleur entre les réacteurs.

La dernière étape de fonctionnement est représentée sur la figure 5F. Lors de cette étape, le réacteur R passe du point D' pour revenir au point A de départ. De manière analogue, le réacteur R' passe du point B' pour revenir à son point de départ C. Lors des étapes 1 et 3, le passage des réacteurs du point A au point B', qui s'accompagne dans l'exemple proposé de la décomposition des deux sels situés le plus à gauche dans le diagramme de Clapeyron, s'effectue sans consommation d'énergie extérieure au système. Ceci permet d'améliorer le COP du procédé. L'augmentation du COP dépendra du nombre de sels sélectionnés et de leur positionnement dans le diagramme de Clapeyron.

Dans certaines applications, il est souhaitable de produire, par exemple du froid, à deux niveaux de puissance. Par exemple, lorsqu'il est nécessaire de baisser rapidement la température d'une enceinte, puis de maintenir la température pendant un certain laps de temps.

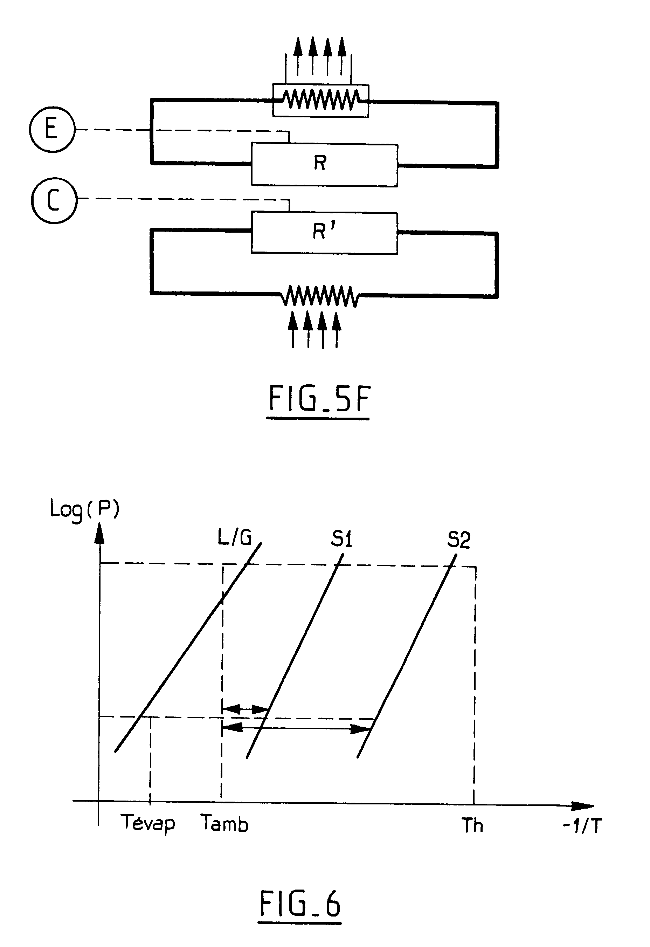

Pour ce faire, on peut préparer un bloc de réactif contenant deux sels $S_1$ et $S_2$ dont les droites d'équilibre sont représentée sur la figure 6. Comme il ressort du diagramme, l'écart à l'équilibre par rapport à la température ambiante Tamb est nettement plus important pour le sel $S_2$ que pour le sel $S_1$. Le sel $S_2$, contenu dans le même bloc que le sel $S_1$, se mettra à réagir rapidement et finira de réagir avec le gaz avant que le sel $S_1$ ne se mette à réagir. Compte tenu du faible écart à l'équilibre, le sel $S_1$ réagira plus lentement et, donc, pendant plus longtemps que le sel $S_2$. On peut envisager d'avoir un bloc muni de plusieurs sels, chaque sel réagissant, l'un après l'autre, en fonction de son écart à l'équilibre par rapport à la température ambiante.

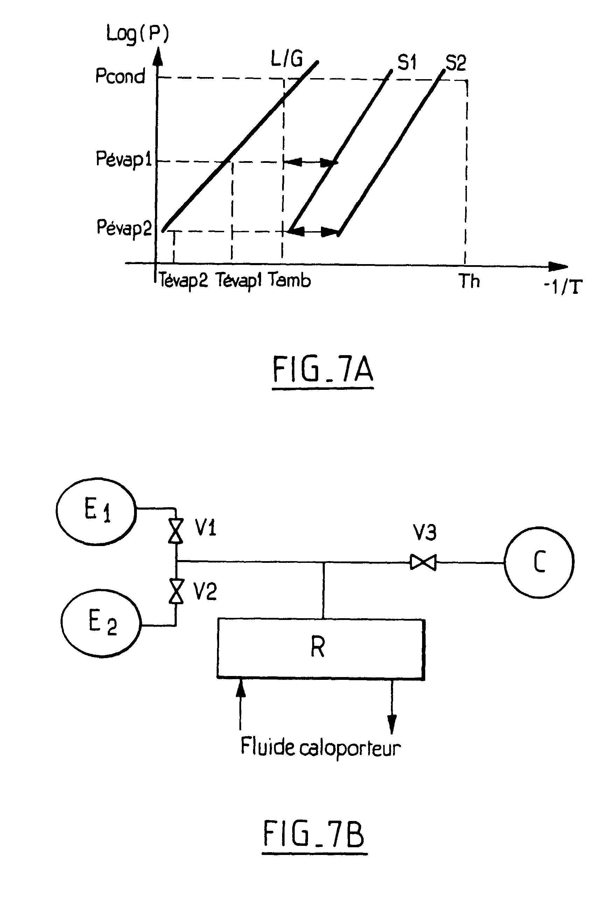

Il peut également être nécessaire de pouvoir produire du froid à deux niveaux de températures différents, par exemple pour faire fonctionner un réfrigérateur/congélateur. Une telle situation est représentée sur la diagramme de Clapeyron de la figure 7A.

Un système permettant d'atteindre ce type de production de froid est représenté sur la figure 7B.

Un réacteur unique R, muni d'un réactif contenant deux sels $S_1$ et $S_2$, et adapté à être relié sélectivement à un condenseur C ou à l'un ou l'autre de deux évaporateurs $E_1$, $E_2$. Le réacteur R est d'abord mis en communication avec l'évaporateur $E_1$. Les sels S1 et S2 ont tous deux effectué leur décomposition à Th. Au démarrage de la phase de production de froid, (la température imposée au réacteur est Tamb) l'écart à l'équilibre plus important entre Tamb et la droite d'équilibre du sel S2 a pour effet que ce sel réagit préférentiellement avec le gaz et impose le niveau de température et de pression au mélange réactif. Lorsque la pression dans le réacteur atteint Pévap2, le réacteur est mis en communication avec l'évaporateur E2 et permet la production de froid à la température Tévap2. Lorsque la réaction entre le sel S2 et le gaz est terminée, la vanne V2 est fermée et la vane V1 est ouverte. Ceci provoque la remontée en pression de Pévap2 à Pévapl. Le sel S1 se trouve alors en condition de synthèse et permet la production de froid par évaporation à une température Tévap1 supérieure à Tévap2. On peut envisager d'utiliser un bloc de réactif imprégné de trois sels ou plus, le système d'utilisation comprend un évaporateur par sel utilisé. Un tel système permettrait du froid à plusieurs niveaux de température.

## Revendications

1. Utilisation d'un système thermochimique, comprenant un réacteur contenant un réactif formé d'un support comprimé et d'un agent actif vis-à-vis d'un gaz, le réacteur étant en communication, dans une première phase opératoire avec une enceinte destinée à retenir le gaz, et dans une deuxième phase opératoire avec une enceinte destinée à libérer le gaz, l'agent actif comprenant au moins deux sels répartis dans l'ensemble du support comprimé, pour produire du froid et/ou de la chaleur à au moins deux niveaux de température, ou à au moins deux niveaux de puissance.

2. Utilisation selon la revendication 1 caractérisée en ce que dans le système utilisé, l'enceinte destinée à retenir le gaz et l'enceinte destinée à libérer le gaz sont constituées par un deuxième réacteur muni d'un réactif formé d'un support comprimé et d'au moins deux sels répartis dans l'ensemble du support comprimé.

**3.** Système thermochimique, destiné à produire du froid et/ou de la chaleur par réaction chimique solide-gaz, comprenant un réacteur contenant un réactif formé d'un support comprimé et d'un agent actif vis-à-vis d'un gaz l'agent actif comprenant au moins deux sels répartis dans l'ensemble du support comprimé, le réacteur étant en communication, dans une première phase opératoire avec un condenseur pour le gaz, le système comprenant de plus deux évaporateurs, le réacteur étant destiné à être mis en communication sélectivement, dans une deuxième phase opératoire, avec l'un ou l'autre des évaporateurs afin de produire du froid à deux niveaux de température.

**Patentansprüche**

**1.** Verwendung eines thermochemischen Systems, das einen Reaktor umfaßt, der ein aus einem verdichteten Träger und einem auf ein Gas reagierenden Mittel gebildetes Reagens enthält, wobei der Reaktor in einer ersten Betriebsphase mit einem zur Aufnahme des Gases bestimmten Behälter und in einer zweiten Betriebsphase mit einem für die Freisetzung des Gases bestimmten Behälter verbunden ist und das reagierende Mittel wenigstens zwei in der Anordnung des verdichteten Trägers verteilte Salze umfaßt, um Kälte und/oder Wärme auf mindestens zwei Temperaturniveaus oder bei wenigstens zwei Leistungsniveaus zu erzeugen.

**2.** Verwendung nach Anspruch 1, dadurch **gekennzeichnet**, daß in dem verwendeten System der zur Aufnahme des Gases bestimmte Behälter und der zur Freisetzung des Gases bestimmte Behälter von einem zweiten Reaktor gebildet werden, der mit einem Reagens ausgestattet ist, das aus einem verdichteten Träger und wenigstens zwei in der Anordnung des verdichteten Trägers verteilten Salzen gebildet ist.

**3.** Thermochemisches System zur Erzeugung von Kälte und/oder Wärme durch chemische Feststoff-Gas-Reaktion, das einen Reaktor umfaßt, der ein aus einem verdichteten Träger und einem auf ein Gas reagierenden Mittel gebildetes Reagens enthält, wobei das reagierende Mittel wenigstens zwei in der Anordnung des verdichteten Trägers verteilte Salze umfaßt, der Reaktor in einer ersten Betriebsphase mit einem Kondensatorkühler für das Gas in Verbindung steht, das System außerdem zwei Verdampfer umfaßt und der Reaktor dazu bestimmt ist, wahlweise in einer zweiten Betriebsphase mit dem einen oder anderen der beiden Verdampfer verbunden zu werden, um auf zwei Temperaturniveaus Kälte zu erzeugen.

**Claims**

**1.** Use of a thermochemical system, comprising a reactor containing a reagent formed of a compressed support and of an agent active with respect to a gas, the reactor communicating in a first operating phase with an enclosure intended to retain the gas, and in a second operating phase with an enclosure intended to liberate the gas, the active agent comprising at least two salts distributed throughout the whole of the compressed support, in order to produce cold and/or heat at at least two temperature levels, or at at least two power levels.

**2.** Use according to Claim 1, characterized in that in the system used, the enclosure intended to retain the gas and the enclosure intended to liberate the gas are constituted by a second reactor provided with a reagent formed of a compressed support and at least two salts distributed throughout the whole of the compressed support.

**3.** Thermochemical system, intended to produce cold and/or heat by solid-gas chemical reaction, comprising a reactor containing a reagent formed of a compressed support and of an agent active with respect to a gas, the active agent comprising at least two salts distributed throughout the whole of the compressed support, the reactor communicating in a first operating phase with a condenser for the gas, the system additionally comprising two evaporators, the reactor being intended to be put into communication selectively, in a second operating phase, with one or the other of the evaporators in order to produce cold at two temperature levels.

FIG.1

FIG. 2

FIG. 3

FIG_4A

FIG_4B

FIG_4C

FIG_4D

FIG. 5A

FIG. 5B

FIG.5C

Echangeur

FIG.5D

FIG.5E

FIG.5F

FIG.6

FIG_7A

Fluide caloporteur

FIG_7B